# EUROPÄISCHE PATENTSCHRIFT

(11) **EP 2 055 529 B1**
(45) Veröffentlichungstag und Bekanntmachung des Hinweises auf die Patenterteilung: **17.03.2010**
(21) Anmeldenummer: 07021380.6
(22) Anmeldetag: 02.11.2007
(51) Int. Cl.: B60Q 1/14, H01H 3/50

(54) **Schaltvorrichtung**
Switching device
Dispositif de commutation

(43) Veröffentlichungstag der Anmeldung: 06.05.2009
(73) Patentinhaber: Delphi Technologies, Inc., Troy, Michigan 48007 (US)
(72) Erfinder: Beisiegel, Michael, 55595 St. Katharinen (DE); Breckheimer, Frank, 55437 Ockenheim (DE); Bendle, Jörg, 55629 Schwarzerden (DE)
(74) Vertreter: Becker, Bernd

(56) Entgegenhaltungen:
- EP-A- 0 747 263
- EP-A- 1 361 112
- EP-A- 1 741 597
- DE-A1- 10 160 801

## Beschreibung

Die Erfindung bezieht sich auf eine Schaltvorrichtung, insbesondere einen Lenkstockschalter für ein Kraftfahrzeug, mit einem axial in einem Gehäuse verschiebbar gelagerten und in Wirkverbindung mit einer Schaltkulisse stehenden Rasteinsatz, der als Hohlkörper ausgebildet und in den ein federbelasteter Druckkörper eingesetzt ist, der direkt oder indirekt eine Aufweitung des Rasteinsatzes in radialer Richtung zumindest in einem Teilbereich des Rasteinsatzes bewirkt, wodurch der Rasteinsatz oder ein Teilbereich des Rasteinsatzes spielfrei an einer Innenwand des Gehäuses anliegt.

Eine solche Schaltvorrichtung ist aus der DE 101 60 801 A1 bekannt.

Derartige Schaltvorrichtungen werden beispielsweise in Kraftfahrzeugen eingesetzt und dienen zur Betätigung der Beleuchtungsanlage, der Fahrtrichtungsanzeigeanlage und/ oder der Scheibenwischanlage. Über ein Betätigungselement, beispielsweise einen Schwenkhebel, wird eine axiale Verschiebung des Rasteinsatzes innerhalb des den Rasteinsatz aufnehmenden Gehäuses bewirkt. Der Rasteinsatz wiederum steht in Wirkverbindung mit einer eine Rastkurve aufweisenden Schaltkulisse, in die der Rasteinsatz verrastend eingreift, wobei er eine Schaltstellung einnimmt. Oftmals weist die Schaltkulisse eine mehrere Schaltstellungen ermöglichende Rastkurvenanordnung auf, um mehrere Funktionen über die Schaltvorrichtung zu schalten.

Die in einer solchen Schaltvorrichtung zusammenwirkenden

Bauteile weisen herstellungsbedingt Toleranzen auf, die zu einem unerwünschten Spiel im Bereich der jeweiligen Lagerflächen führen. Präziser gefertigte Bauteile sind nur mit relativ hohem Aufwand zu realisieren und daher teuer, weshalb die Toleranzen in der Regel hingenommen werden. Stattdessen werden andere konstruktive Maßnahmen ergriffen, um eine spielfreie Lagerung der Bauteile zu ermöglichen und damit die Haptik der Schaltvorrichtung zu verbessern.

Eine ansprechende Haptik weist beispielsweise eine Schaltvorrichtung auf, deren verschiedene Schaltstellungen und Schaltwege bei Betätigung der Schaltvorrichtung klar definiert sind. Es gilt daher vorhandene Bauteiltoleranzen auszugleichen. Die Schaltvorrichtung sollte zudem weder hakeln, noch klemmen. Ferner sollte der Schaltvorgang möglichst geräuschlos durchzuführen sein.

Aus dem Stand der Technik bekannte Vorschläge zur Verbesserung einer gattungsgemäßen Schaltvorrichtung sehen daher eine spielfreie Lagerung des Rasteinsatzes oder Rastbolzens vor. Hierzu werden verschiedene konstruktive Maßnahmen am Rastbolzen selbst vorgenommen.

Die DE 199 36 484 C1 schlägt die Ausstattung eines in einer Aufnahmekammer geführten Rast- bzw. Steuerbolzens mit einem Lagerring aus einem Gleitlagermaterial vor. Dabei ist der Außendurchmesser des Lagerrings maßlich genau auf den Innendurchmesser der Aufnahmekammer abgestimmt. Der Lagerring liegt somit reibschlüssig an der Innenwandung der Aufnahmekammer an. Das Gleitlagermaterial des Lagerrings soll bewirken, dass einer axialen Verschiebung des Steuerbolzens innerhalb der Aufnahmekammer keine zu großen Reibungskräfte entgegenwirken.

Aus der DE 101 48 554 C1 ist eine Schalteinrichtung mit einem in einem Rastbolzengehäuse geführten Rastbolzen bekannt, der zur Führung umfangseitig sich axial erstreckende biegeweiche und/oder elastische Führungsrippen aufweist. Der Rastbolzen mit Führungsrippen besitzt ein Übermaß gegenüber dem Rastbolzengehäuse, so dass im montierten Zustand die Führungsrippen unter einer gewissen Vorspannung an der Innenwandung des Gehäuses anliegen. Die Anlageflächen sind dabei auf die äußeren Flächen der Führungsrippen beschränkt, wodurch eine axiale Verschiebbarkeit des Rastbolzens weiterhin gewährleistet bleiben soll.

Aufgabe der vorliegenden Erfindung ist es, eine Schaltvorrichtung der eingangs genannten Art zu schaffen, deren Bauteilausbildung und -anordnung einen Toleranzausgleich bewirken, um den vorgehend beschriebenen Anforderungen an eine Schaltvorrichtung mit optimalen haptischen Eigenschaften gerecht zu werden.

Erfindungsgemäß wird die Aufgabe dadurch gelöst, dass der Druckkörper ein kuppelartig ausgebildetes Ende aufweist, das die axial wirkende Federkraft
- auf wenigstens einen Innenwandabschnitt des Rasteinsatzes überträgt, der schräg nach innen verläuft, wobei der Rasteinsatz zumindest in einem Teilbereich eine radiale Aufweitung aufweist und sich gegenüber liegende, schräg nach innen verlaufende Innenwandabschnitte des Rasteinsatzes in entspanntem Zustand einen Winkel zwischen 25 und 35°, vorzugsweise 31°, umschließen oder
- auf einen innerhalb des Rasteinsatzes angeordneten elastischen Körper überträgt, wobei sich der elastische Körper verformt und eine radiale Aufweitung des Rasteinsatzes zumindest in einem Teilbereich des Rasteinsatzes bewirkt.

Durch das Aufweiten des Rasteinsatzes werden Lagertoleranzen ausgeglichen, so dass die Lagerung des Rasteinsatzes zumindest in einem Teilbereich spielfrei erfolgt. Dieser aufgeweitete und damit eine spielfreie Lagerung gewährleistende Teilbereich sollte sich in Nähe der Schaltkulisse befinden, um eine optimale Führung des Rasteinsatzes beim Schaltvorgang zu ermöglichen.

Nach einer Ausführungsform der Erfindung liegt wenigstens ein schräg nach innen verlaufend ausgebildeter Innenwandabschnitt des Rasteinsatzes an dem kuppelförmigen Ende des Druckkörpers an, das heißt, dass der Innenwandabschnitt des Rastkörpers nach innen vorspringt, um in Anlage mit dem kuppelartigen Ende des Druckkörpers zu gelangen, das die axial wirkende Federkraft auf den oder die schräg verlaufenden Innenwandabschnitte des Rasteinsatzes überträgt. Dabei erfährt der Rastkörper zumindest in einem Teilbereich eine radiale Aufweitung. Denn die ursprünglich ausschließlich axial wirkende Federkraft wird im Anlagebereich des Innenwandabschnitts des Rasteinsatzes an dem kuppelartigen Ende des Druckkörpers in eine axial und in eine radial wirkende Komponente aufgeteilt. Die Schrägstellung des Innenwandabschnitts bestimmt den Anteil der radial wirkenden Kraft. In entspanntem Zustand, das heißt ohne eingesetzten federbelasteten Druckkörper, schließen die sich gegenüber liegenden Innenwandflächen einen Winkel (α) zwischen 25 und 35°, vorzugsweise 31° ein.

Bei einer alternativen Ausführungsform der Erfindung nimmt der als Hohlkörper ausgebildete Rasteinsatz nicht nur den federbelasteten Druckkörper auf, sondern zusätzlich noch den in Wirkrichtung der Feder hinter dem Druckkörper angeordneten elastischen Körper. Der Druckkörper überträgt die Federkraft nunmehr nicht direkt auf den Rasteinsatz, sondern über sein kuppelartig ausgebildetes Ende auf den innerhalb des Rasteinsatzes angeordneten elastischen Körper, der sich dabei verformt und eine radiale Aufweitung des Rasteinsatzes zumindest in einem Teilbereich des Rasteinsatzes bewirkt.

Ursächlich für das Aufweiten des Rasteinsatzes ist die axial wirkende Kraft der Feder, die den Druckkörper beaufschlagt. Das dem Druckkörper abgewandte Ende der Feder wird in einer Ausnehmung des Gehäusebodens gehalten. Ein Teil der axial wirkenden Federkraft wird über den Druckkörper derart auf zumindest einen Teilbereich des Rasteinsatzes direkt oder indirekt übertragen, dass dieser Teil in eine radial wirkende Kraft umgewandelt wird, welche die Aufweitung bewirkt. Durch die Aufweitung wird zumindest in diesem Teilbereich ein toleranzbedingtes Spiel zwischen Rasteinsatz und Gehäuse eliminiert, wodurch bei einer axialen Verschiebung des Rasteinsatzes innerhalb des Gehäuses der Rasteinsatz von den Gehäuseinnenwänden geführt wird.

Vorzugsweise ist der Druckkörper als einseitig offene Hülse ausgebildet und umgibt die Feder zumindest teilweise. Der Öffnung gegenüberliegend und damit in Wirkrichtung der Federkraft weist der Druckkörper bevorzugt ein kuppelartig ausgebildetes Ende auf. Beispielsweise kann eine im Wesentlichen zylindrische Hülse in einer Halbkugelform enden.

Die die Aufweitung des Rasteinsatzes bewirkende Verformung des elastischen Körpers setzt voraus, dass der elastische Körper in axialer Richtung eine Stauchung erfährt. Dabei stützt sich der elastische Körper gegen sich radial nach innen erstreckende und den elastischen Körper zumindest teilweise umgreifende Vorsprünge des Rasteinsatzes ab. Die Stauchung wiederum bewirkt eine radiale Aufweitung des elastischen Körpers, die sich über die anliegenden Wandabschnitte auf den Rastkörper überträgt.

Eine Aufweitung des Rasteinsatzes setzt weiterhin voraus, dass zumindest ein Teilbereich des Rasteinsatzes sich gegenüber radial wirkenden Kräften als nachgiebig erweist, unabhängig davon, ob diese direkt oder indirekt von dem Druckkörper auf den Rasteinsatz übertragen werden. Zweckmäßigerweise besteht daher der Rasteinsatz zumindest teilweise aus einem elastischen Material.

Alternativ oder zusätzlich kann der Rasteinsatz wenigstens einen Federarm besitzen, der durch einen U-förmigen Freischnitt in einer Seitenwand des Rasteinsatzes ausgebildet ist. Auf den Federarm radial wirkende Kräfte führen zu einer Schwenkbewegung des Federarms, bis das freie Ende des Federarms an der Gehäuseinnenwand anliegt. Bei einer Anordnung von weniger als drei gleichmäßig um den Umfang verteilten Federarmen, kann der Rasteinsatz dabei auch eine radiale Verschiebung erfahren. Dies kann erwünscht sein, um beispielsweise eine spielfreie Lagerung einer von dem Rasteinsatz gehaltenen Rolle zu bewirken, über die der Rasteinsatz in Eingriff mit der Schaltkulisse steht.

Sofern wenigstens ein Federarm am Rastelement angeordnet ist, erfährt der Rasteinsatz bereits dadurch eine Aufweitung, dass dieser eine Federarm bei Krafteinwirkung verschwenkt wird. Entsprechend dem ersten Ausführungsbeispiel weist er hierzu einen schräg nach innen verlaufenden Innenwandabschnitt auf, der an dem kuppelförmigen Ende des Druckkörpers anliegt. Entsprechend dem zweiten Ausführungsbeispiel besitzt der Federarm einen sich axial erstreckenden Innenwandabschnitt, der an einer Seitenfläche des elastischen Körpers anliegt. Darüber hinaus kann eine Aufweitung des Rasteinsatzes dadurch bewirkt werden, dass zumindest in einem Teilbereich der Rasteinsatz elastisch ausgebildet ist.

Um die Kontaktfläche mit der Gehäuseinnenwand und damit die einer axialen Verschiebung des Rasteinsatzes entgegenstehenden Reibungskräfte möglichst gering zu halten, weist der wenigstens eine Federarm an seinem freien Ende gehäuseseitig eine Erhebung auf, die im Längsschnitt vorzugsweise bogen- oder kreisförmig ist. Entsprechend ausgebildete Erhebungen können umfangseitig gleichmäßig verteilt angeordnet sein, um die Kontaktflächen des Rasteinsatzes mit der Gehäuseinnenwand weiter zu reduzieren.

Vorteilhafterweise besitzt der Rasteinsatz Außenwandabschnitte, die gegenüber einer Hüllfläche zurückgesetzt sind und demnach nicht in Anlage mit der Gehäuseinnenwand gelangen. Vorzugsweise liegen die von der Gehäuseinnenwand zurückgesetzten Abschnitte am federseitigen Ende des Rasteinsatzes. Beim Zusammensetzen der Schaltvorrichtung wird dieses Ende zuerst in das Gehäuse eingeführt, so dass die zurückgesetzten Bereiche das Zusammensetzen erleichtern. Aus diesem Grund erweist es sich auch als vorteilhaft, den Rasteinsatz an seinem der Feder zugewandten Ende konisch auszubilden.

Das Zusammensetzen der Bauteile kann auch dadurch vereinfacht werden, dass der Rasteinsatz vollständig aus einem elastischen Material besteht. Unter dieser Voraussetzung kann der Rasteinsatz gegenüber dem Gehäuse ein leichtes Übermaß besitzen, wodurch der Rasteinsatz bereits mit einer gewissen Vorspannung in das Gehäuse eingeführt wird.

Im Unterschied zum Rasteinsatz, der ganz oder teilweise aus einem elastischen Material bestehen kann, besteht der Druckkörper aus einem formstabilen Material, vorzugsweise aus Metall.

Ausführungsbeispiele der Erfindung werden im Folgenden unter Bezugnahme auf die zugehörigen Zeichnungen näher erläutert. Es zeigt:
- Fig.1: einen Längsschnitt durch ein erstes Ausführungsbei- spiel der Erfindung,
- Fig.2: einen Längsschnitt durch ein zweites Ausführungs- beispiel der Erfindung,
- Fig.3: eine erste Seitenansicht eines Rasteinsatzes,
- Fig.4: einen Querschnitt durch den Rasteinsatz gemäß Fig. 3 entlang der Linie A-A,
- Fig.5: eine zweite Seitenansicht des Rasteinsatzes gemäß Fig. 3,
- Fig.6: einen Querschnitt durch den Rasteinsatz nach Fig. 5 entlang der Linie B-B,
- Fig.7: einen Längsschnitt durch den Rasteinsatz gemäß Fig. 3 und
- Fig.8: einen Querschnitt durch den Rasteinsatz entlang der Linie C-C.

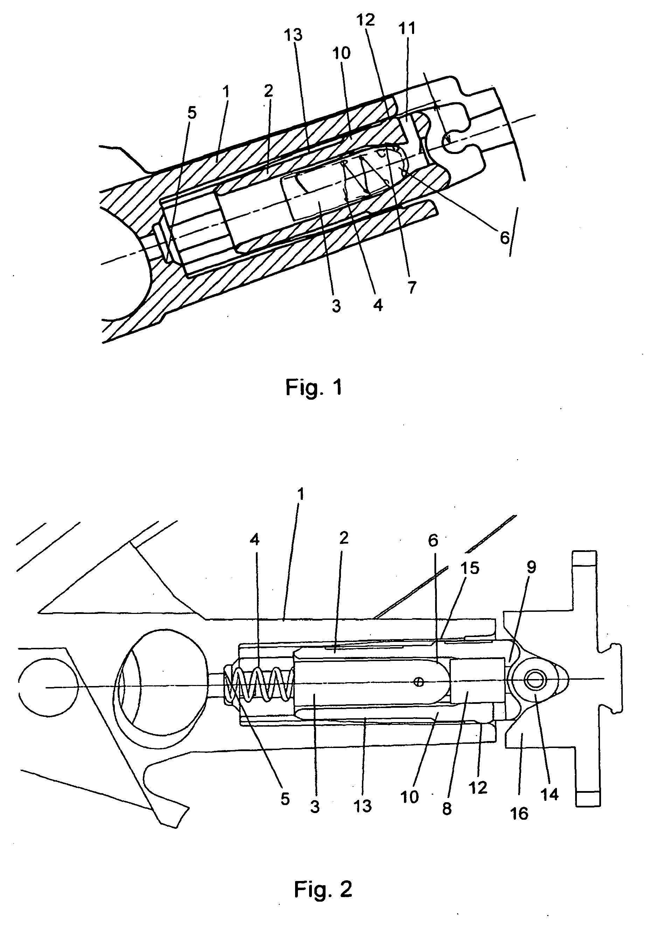

Dem Längsschnitt nach Fig. 1 ist ein Gehäuse 1, ein hierin axial verschiebbar angeordneter, als Hohlkörper ausgebildeter Rasteinsatz 2 und ein federbelasteter Druckkörper 3 einer erfindungsgemäßen Schaltvorrichtung zu entnehmen.

Das Gehäuse 1 weist bodenseitig eine Ausnehmung 5 auf, in der ein Ende einer Feder 4 (nur andeutungsweise dargestellt) gehalten ist. Das andere Ende der Feder 4 liegt am Druckkörper 3 an, der als einseitig offene Hülse ausgebildet ist und die Feder 4 zumindest teilweise aufnimmt. Das der Öffnung gegenüber liegenden Ende 6 des Druckkörpers 3 besitzt die Form einer Halbkugel und liegt an schräg nach innen verlaufenden Innenwandabschnitten 7 des Rasteinsatzes 2 an.

Die genannten Bestandteile der Schaltvorrichtung sind im Betriebszustand gezeigt. Der federbelastete Druckkörper 3 überträgt die axial wirkende Federkraft auf die schräg nach innen verlaufenden Innenwandabschnitte 7, wodurch ein als Federarm 10 ausgebildeter Teilbereich des Rasteinsatzes 2 verschwenkt und an die Gehäuseinnenwand gedrückt wird. In Anlage mit der Gehäuseinnenwand gelangt der Federarm 10 jedoch nur im Bereich einer bogenförmigen Erhebung 12, die gehäuseseitig an dem freien Ende des Federarms 10 ausgebildet ist.

Dadurch, dass nur ein Federarm 10 vorgesehen ist, liegt die Längsachse des Rasteinsatzes 2 gegenüber der Längsachse des Gehäuses 1 geringfügig versetzt. Die Verschiebung quer zur Längsachse bewirkt, dass eine Rolle 14 (siehe Fig. 2), über die der Rasteinsatz 2 in Eingriff mit einer Schaltkulisse 16 steht, spielfrei an dem Rasteinsatz 2 anliegt.

Der Rasteinsatz 2 besitzt großflächige Außenwandabschnitte 13, die gegenüber der Gehäuseinnenwand zurückspringen und endseitig zur Feder 4 hin angeordnet sind. Die Außenwandabschnitte 13 erleichtern das Einsetzen des Rasteinsatzes 2 in das Gehäuse 1. Darüber hinaus sind die Außenwandabschnitte 13 an ihren Enden konisch zulaufend ausgebildet, wodurch ebenfalls das Einsetzen des Rasteinsatzes 2 erleichtern wird.

Bei dem Ausführungsbeispiel der Erfindung nach Fig. 2 wird im Unterschied zum vorhergehenden Ausführungsbeispiel die axial wirkende Federkraft nicht direkt von dem Druckkörper 3 auf den Rasteinsatz 2 übertragen, sondern indirekt über einen zwischengeschalteten elastischen Körper 8. Dieser ist derart in dem Rasteinsatz 2 angeordnet, dass seine Umfangsflächen vollständig an den Innenwandflächen des Rasteinsatzes 2 anliegen. Sich radial nach innen erstreckende Vorsprünge 9 der Innenwandflächen des Rasteinsatzes 2 umgreifen den elastischen Körper 8 stirnseitig, wodurch die Federkraft der Feder 4 im Wesentlichen eine Stauchung des elastischen Körpers 8 in axialer Richtung und ein Aufweiten in radialer Richtung bewirkt.

Den beiden dargestellten Ausführungsformen ist gemeinsam, dass auch der Rasteinsatz 2 nach Fig. 2 einen Federarm 10 mit einer gehäuseseitigen Erhebung 12 besitzt. Die Verformung des elastischen Körpers 8 bewirkt, dass der Federarm 10 über eine Schwenkbewegung an die zugeordnete Gehäuseinnenwand gedrückt wird und dabei den Rasteinsatz 2 verschiebt, bis auch die dem Federarm 10 gegenüberliegende Seite des Rasteinsatzes 2 an der Gehäuseinnenwand anliegt. Um die Anlagefläche möglichst gering zu halten, weist auch diese Außenwandfläche eine Erhebung 15 auf.

Neben der Ausbildung eines Federarms oder alternativ hierzu können beide dargestellten Ausführungsformen auch einen Rasteinsatz aus einem elastischen Material aufweisen, damit die mittels des Druckkörpers 3 übertragene Federkraft ein Aufweiten des Rasteinsatzes 2 bewirkt. Dabei ist eine elastische Ausbildung eines Teilbereichs des Rasteinsatzes 2 bereits ausreichend.

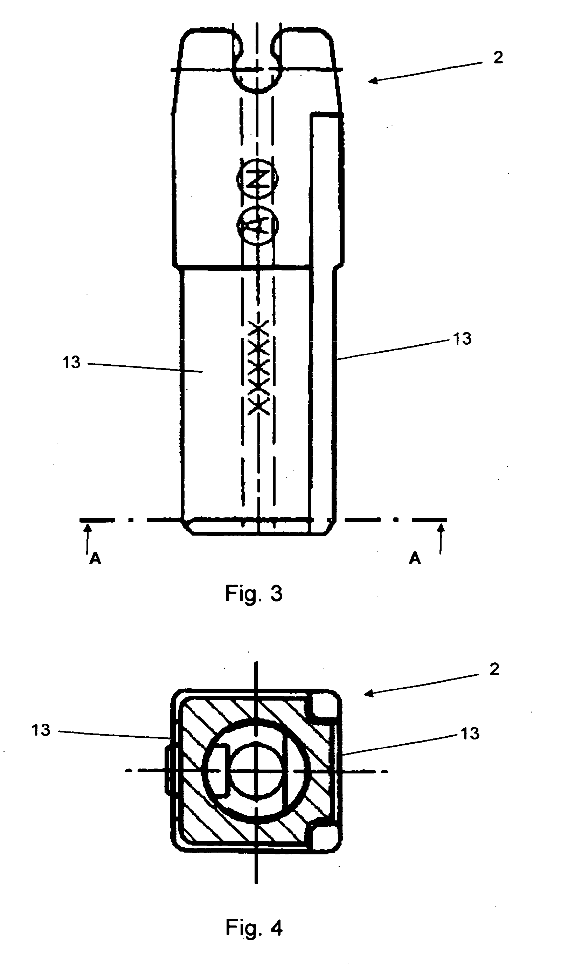

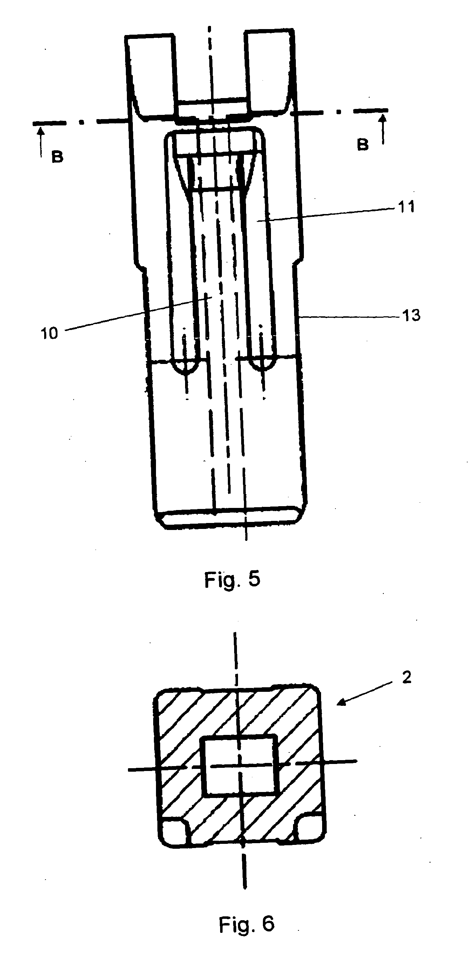

Die Fig. 3 bis 8 dienen der Beschreibung des als Hohlkörper ausgebildeten Rasteinsatzes 2. in den Fig. 3 und 5 sind zwei Seitenansichten des Rasteinsatzes dargestellt. Den beiden Seitenansichten sind zurückspringende und an ihren Enden konisch zulaufende Außenwandabschnitte 13 zu entnehmen. Fig. 5 zeigt darüber hinaus einen U-förmigen Freischnitt 11 in einer Seitenwand des Rastkörpers 2, wodurch ein Federarm 10 ausgebildet wird. Die Fig. 4 und 6 veranschaulichen jeweils den Seitenansichten der Fig. 3 und 5 zugeordnete Querschnitte durch den Rasteinsatz 2. Der Rasteinsatz 2 besitzt eine im Wesentlichen quadratische Querschnittsform. Er kann aber auch jede andere Querschnittsform aufweisen.

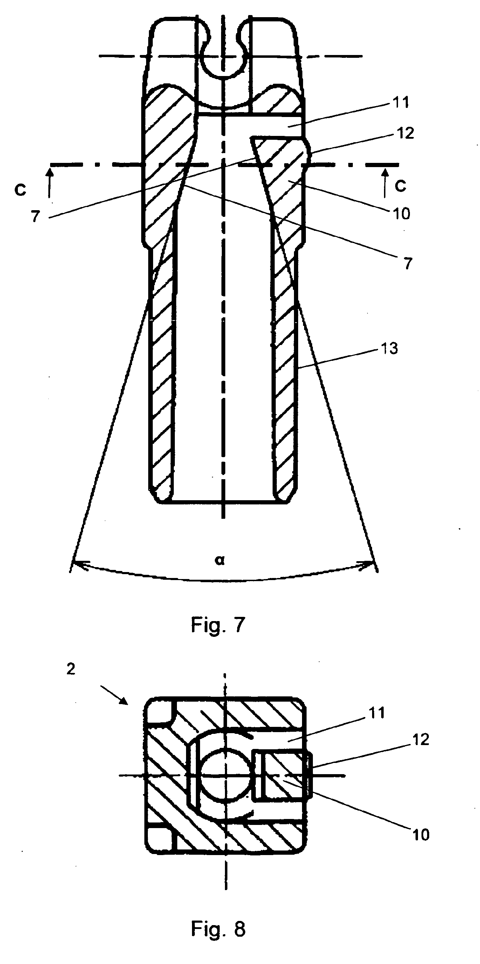

Zur Rollenaufnahme hin, das heißt zu dem der Schaltkulisse 16 zugewandten Ende hin, verlaufen die Innenwandabschnitte 7 schräg nach innen (Fig. 7), wodurch sich ein verdickter Wandquerschnitt ergibt. Diese Innenwandabschnitte 7 bilden Anlageflächen für das kuppelartige Ende 6 des federbelasteten Druckkörpers 3, der in Fig. 7 nicht dargestellt ist. Ein schräg verlaufender Innenwandabschnitt 7 ist an dem Federarm 10 ausgebildet, der bei entsprechender Druckbelastung auf diesen Abschnitt eine Schwenkbewegung ausführt. Über die Schwenkbewegung gelangt der Federarm 10 mit seiner gehäuseseitig angeordneten bogenförmigen Erhebung 12 in Anlage mit der Gehäuseinnenwand. Als vorteilhaft in Bezug auf Kraftübertragung und -umlenkung hat sich ein Winkel α = 31° zwischen den sich gegenüberliegenden, schräg verlaufenden Innenwandabschnitten 7 erwiesen. Fig. 8 zeigt einen weiteren Querschnitt durch den Rasteinsatz. Deutlich ist der Freischnitt 11 des Federarmes 10 zu erkennen.

## Patentansprüche

1. Schaltvorrichtung, insbesondere Lenkstockschalter für ein Kraftfahrzeug, mit einem axial in einem Gehäuse (1) verschiebbar gelagerten und in Wirkverbindung mit einer Schaltkulisse (16) stehenden Rasteinsatz (2), der als Hohlkörper ausgebildet und in den ein federbelasteter Druckkörper (3) eingesetzt ist, der direkt oder indirekt eine Aufweitung des Rasteinsatzes in radialer Richtung zumindest in einem Teilbereich des Rasteinsatzes (2) bewirkt, wodurch der Rasteinsatz (2) oder ein Teilbereich des Rasteinsatzes (2) spielfrei an einer Innenwand des Gehäuses (1) anliegt, **dadurch gekennzeichnet, dass** der Druckkörper (3) ein kuppelartig ausgebildetes Ende (6) aufweist, das die axial wirkende Federkraft
- auf wenigstens einen Innenwandabschnitt (7) des Rasteinsatzes (2) überträgt, der schräg nach innen verläuft, wobei der Rasteinsatz (2) zumindest in einem Teilbereich eine radiale Aufweitung aufweist und sich gegenüber liegende, schräg nach innen verlaufende Innenwandabschnitte (7) des Rasteinsatzes (2) in entspanntem Zustand einen Winkel (α) zwischen 25 und 35°, vorzugsweise 31°, umschließen oder
- auf einen innerhalb des Rasteinsatzes (2) angeordneten elastischen Körper (8) überträgt, wobei sich der elastische Körper (8) verformt und eine radiale Aufweitung des Rasteinsatzes (2) zumindest in einem Teilbereich des Rasteinsatzes bewirkt.

2. Schaltvorrichtung nach Anspruch 1, **dadurch gekennzeichnet, dass** der Druckkörper (3) von einer Feder (4) in axialer Richtung beaufschlagt ist, und das dem Druckkörper (3) abgewandte Ende der Feder (4) in einer Ausnehmung (5) des Gehäusebodens gehalten ist.

3. Schaltvorrichtung nach Anspruch 1 oder 2, **dadurch gekennzeichnet, dass** der Druckkörper (3) als einseitig offene Hülse ausgebildet ist und die Feder (4) zumindest teilweise umgibt.

4. Schaltvorrichtung nach Anspruch 1, **dadurch gekennzeichnet, dass** der Rasteinsatz (2) sich radial nach innen erstreckende und den elastischen Körper (8) zumindest teilweise umgreifende Vorsprünge (9) aufweist.

5. Schaltvorrichtung nach einem der Ansprüche 1 bis 4, **dadurch gekennzeichnet, dass** der Rasteinsatz (2) zumindest teilweise aus einem elastischen Material besteht.

6. Schaltvorrichtung nach einem der Ansprüche 1 bis 5, **dadurch gekennzeichnet, dass** der Rasteinsatz (2) mindestens einen Federarm (10) besitzt, der durch einen U-förmigen Freischnitt (11) in einer Seitenwand des Rasteinsatzes (2) ausgebildet ist.

7. Schaltvorrichtung nach Anspruch 6, **dadurch gekennzeichnet, dass** der Federarm (10) an seinem freien Ende gehäuseseitig eine Erhebung (12) besitzt, die im Längsschnitt insbesondere bogen- oder kreisförmig ist.

8. Schaltvorrichtung nach einem der Ansprüche 1 bis 7, **dadurch gekennzeichnet, dass** der Rasteinsatz (2) Außenwandabschnitte (13) besitzt, die gegenüber einer Hüllfläche zurückgesetzt sind.

9. Schaltvorrichtung nach einem der Ansprüche 1 bis 8, **dadurch gekennzeichnet, dass** der Rasteinsatz (2) an seinem der Feder (4) zugewandeten Ende konisch ausgebildet ist.

10. Schaltvorrichtung nach einem der Ansprüche 1 bis 9, **dadurch gekennzeichnet, dass** der Rasteinsatz (2) über eine Rolle (14) in Eingriff mit der Schaltkulisse (16) steht.

11. Schaltvorrichtung nach einem der Ansprüche 1 bis 19, **dadurch gekennzeichnet, dass** der Druckkörper (3) aus Metall besteht.

## Claims

1. A switch device, particularly a steering column switch for a motor vehicle, with a latching insert (2), which is mounted in a moveable manner axially in a housing (1) and which works in conjunction with a gear-shifting gate (16), wherein the latching insert (2) is designed as a hollow body and into which a spring-loaded pressure body (3) is inserted, which effects, directly or indirectly, an expansion of the latching insert into the radial direction, at least in a partial area of the latching insert (2), whereby the latching insert (2) or a partial area of the latching insert (2) contacts an interior wall of the housing (1) in a play-free manner, **characterised in that** the pressure body (3) has an end (6), designed the form of a dome, which transfers the axial spring force
- to at least one interior wall section (7) of the latching insert (2), which proceeds diagonally toward the inside, wherein the latching insert (2) has a radial expansion in a partial area, and interior wall sections (7) of the latching insert (2), which are opposing and proceed diagonally toward the inside, in a relaxed condition, form an angle (α), of between 25 and 35°, or preferably 31°; or
- to an elastic body (8), located inside the latching insert (2), wherein the elastic body (8) is deformed and a radial expansion of the latching insert (2) is effected, at least in a partial area of the latching insert.

2. The switch device according to Claim 1, **characterised in that** the pressure body (3) is impacted by a spring (4) in the axial direction, and the end of the spring (4) facing away from the pressure body (3) is held in a recess (5) of the housing bottom.

3. The switch device according to either Claim 1 or Claim 2, **characterised in that** the pressure body (3) is designed as a sleeve, which is open on one side, and at least partially encloses the spring (4).

4. The switch device according to Claim 1, **characterised in that** the latching insert (2) has protrusions (9), which extend radially toward the inside and which, at least partially, surround the elastic body (8).

5. The switch device according to any of Claims 1 to 4, **characterised in that** the latching insert (2) at least partially comprises elastic material.

6. The switch device according to any of Claims 1 to 5, **characterised in that** the latching insert (2) has at least one spring arm (10), which is formed by a U-shaped clearance cut (11) in a side wall of the latching insert (2).

7. The switch device according to Claim 6, **characterised in that** the spring arm (10) has a rise (12) on its free end, on the housing side, wherein the rise (12) is shaped particularly as an arc or circle along the longitudinal section.

8. The switch device according to any of Claims 1 to 7, **characterised in that** the latching insert (2) has external wall sections (13), which are recessed with respect to an enveloping surface.

9. The switch device according to any of Claims 1 to 8, **characterised in that** the latching insert (2) is shaped as a cone at its end facing toward the spring (4).

10. The switch device according to any of Claims 1 to 9, **characterised in that** the latching insert (2) is interlocking with the gear-shifting gate (16) via a roller (14).

11. The switch device according to any of Claims 1 to 19, **characterised in that** the pressure body (3) comprises metal.

## Revendications

1. Dispositif de commutation, en particulier commutateur de colonne de direction pour un véhicule à moteur avec, logé dans un boîtier (1) de manière à pouvoir être déplacé dans le sens axial et en liaison active avec une grille de sélection (16), un insert de verrouillage (2) étant conçu comme un corps creux et dans lequel est inséré, commandé par un ressort, un corps de pression (3) provoquant, de manière directe ou indirecte, une expansion dans le sens radial de l'insert de verrouillage (2) par laquelle l'insert de verrouillage (2) ou une zone partielle de l'insert de verrouillage (2) s'appuie sans jeu contre une paroi intérieure du boîtier (1), **caractérisé en ce que** le corps de pression (3) présente, conçue en forme de dôme, une extrémité (6) qui transmet la force de ressort à effet axial
- à une section de paroi intérieure (7), au moins, de l'insert de verrouillage (2), qui s'étend en biais vers l'intérieur, avec l'insert de verrouillage (2) présentant une expansion radiale dans au moins une partie et des sections de paroi intérieure (7) opposées de l'insert de verrouillage (2) s'étendant en biais vers l'intérieur et formant, à l'état détendu, un angle (α) mesurant de 25 à 35°, de préférence 31°, ou
- à un corps élastique (8) disposé à l'intérieur de l'insert de verrouillage (2), corps élastique (8) se déformant et provoquant une expansion radiale de l'insert de verrouillage (2) dans au moins une partie de l'insert de verrouillage.

2. Dispositif de commutation selon la revendication 1, **caractérisé en ce que** le corps de pression (3) est soumis à l'action d'un ressort (4) dans le sens axial et **en ce que** l'extrémité du ressort (4) située à l'opposé du corps de pression (3) est maintenue dans un évidement (5) aménagé dans le fond du boîtier.

3. Dispositif de commutation selon la revendication 1 ou 2, **caractérisé en ce que** le corps de pression (3) est conçu sous forme de douille ouverte d'un côté et entoure, au moins partiellement, le ressort (4).

4. Dispositif de commutation selon la revendication 1, **caractérisé en ce que** l'insert de verrouillage (2) présente des parties saillantes (9) s'étendant vers l'intérieur dans le sens radial et enveloppant, au moins partiellement, le corps élastique (8).

5. Dispositif de commutation selon l'une des revendications 1 à 4, **caractérisé en ce que** l'insert de verrouillage (2) se compose, au moins partiellement, d'un matériau élastique.

6. Dispositif de commutation selon l'une des revendications 1 à 5, **caractérisé en ce que** l'insert de verrouillage (2) est doté d'au moins un bras à ressort (10) formé via une découpe en forme de U (11) dans une paroi latérale de l'insert de verrouillage (2).

7. Dispositif de commutation selon la revendication 6, **caractérisé en ce que**, côté boîtier, le bras à ressort (10) est, à son extrémité libre, doté d'une protubérance (12) qui est en particulier de forme arquée ou circulaire dans sa section longitudinale.

8. Dispositif de commutation selon l'une des revendications 1 à 7, **caractérisé en ce que** l'insert de verrouillage (2) est doté de sections de paroi extérieure (13) qui sont en retrait par rapport à une surface enveloppante.

9. Dispositif de commutation selon l'une des revendications 1 à 8, **caractérisé en ce que** l'insert de verrouillage (2) est de forme conique à son extrémité orientée vers le ressort (4).

10. Dispositif de commutation selon l'une des revendications 1 à 9, **caractérisé en ce que** l'insert de verrouillage (2) est en prise avec la grille de sélection (16) via un rouleau (14).

11. Dispositif de commutation selon l'une des revendications 1 à 19, **caractérisé en ce que** le corps de pression (3) se compose de métal.
